Europäisches Patentamt

European Patent Office

Office européen des brevets

(19)

(11) Veröffentlichungsnummer: **0 083 677**
**A1**

(12) ## EUROPÄISCHE PATENTANMELDUNG

(21) Anmeldenummer: **82100186.4**

(22) Anmeldetag: **13.01.82**

(51) Int. Cl.³: **G 03 B 41/08**
**G 02 B 27/00**

(43) Veröffentlichungstag der Anmeldung:
**20.07.83 Patentblatt 83/29**

(84) Benannte Vertragsstaaten:
**AT BE CH DE FR GB IT LI LU NL SE**

(71) Anmelder: **Haberkern, Ottmar**
**Reuchlinstrasse 24**
**D-6200 Wiesbaden(DE)**

(72) Erfinder: **Schael, Rudi**
**Weilstrasse 15**
**D-6330 Wetzlar 21-Nauborn(DE)**

(72) Erfinder: **Haberkern, Ottmar**
**Reuchlingstrasse 24**
**D-6200 Wiesbaden(DE)**

(54) **Optisches System für die Laufbildprojektion.**

(57) Es wird ein optisches System für die Laufbildprojektion mit optischem Ausgleich der Bildwanderung beschrieben. Das System zeichnet sich durch eine große eingangsseitige Schnittweite aus, die es gestattet, ein vielflächiges Polygonprisma (5) im Strahlengang unterzubringen. Das System besteht aus zwei Linsengruppen (6,9), von denen die erste (6) ein Zwischenbild mit einer geringen Vergrößerung erzeugt, während die zweite Linsengruppe (9) dieses Zwischenbild mit einer stärkeren Vergrößerung auf den Projektionsschirm (10) abbildet. Dabei hat die erste Linsengruppe einen Abbildungswinkel von gleich oder kleiner als 2 × 10° und die zweite Linsengruppe hat einen Abbildungswinkel von gleich oder größer als 2 × 10° Zwischen der ersten und der zweiten Linsengrupe ist in der Nähe der Zwischenbildebene eine Feldlinse (7) zur Pupillenabbildung und zur Lichtführung angeordnet.

EP 0 083 677 A1

Die Erfindung betrifft ein optisches System für die Laufbildprojektion mit optischem Ausgleich der Bildwanderung.

Bei der Laufbildprojektion ist es bekannt, den Film ruckweise durch einen Greifer zu transportieren und den Strahlengang im Moment des Filmtransportes durch eine Sektorenblende abzudecken (mechanischer Ausgleich der Bildwanderung). Die dabei verwendeten Projektionsobjektive sind zur Erzielung einer großen Lichtstärke verhältnismäßig aufwendig gebaut. Ein aus der DE-OS 30 33 126 bekanntes Objektiv mit fester Brennweite benötigt z.B. für eine gute Abbildungsleistung bei großem Öffnungsverhältnis 5 Linsen. Bei Vario-Objektiven beträgt die Linsenzahl sogar wenigstens 6, wie aus der DE-PS 12 36 816 bekannt ist.

Diese Objektive sind so ausgelegt, daß ihre Eingangsschnittweite gerade genügend Raum für den Greifermechanismus und die Sektorenblende frei läßt.

Der ruckweise Filmtransport durch den Greifer hat jedoch den Nachteil, daß der Film mechanisch stark beansprucht wird, und die umlaufende Sektorenblende deckt einen erheblichen Prozentsatz des Projektionslichtes ab, so daß die Helligkeit stark vermindert wird.

Diese Nachteile werden bei einem ebenfalls bekannten Laufbildprojektionsverfahren mit optischem Ausgleich der Bildwanderung vermieden, bei dem der Film kontinuierlich durch den Strahlengang bewegt und die Bildwanderung durch ein im Strahlengang synchron zur Filmbewegung rotierendes Polygon kompensiert wird, das meist als refraktives Polygon, d.h. als Polygonprisma ausgebildet ist.

Für derartige Projektionsgeräte mit optischem Ausgleich der Bildwanderung können jedoch die vorgenannten Projektionsobjektive nicht verwendet werden. Ihre eingangsseitige Schnittweite ist dafür zu gering. Wegen des im Strahlengang befindlichen Polygonprismas werden Objektive mit erheblich größerer Eingangsschnittweite benötigt.

Diese Eingangsschnittweite muß sogar besonders groß sein, weil bei dem eingesetzten Polygonprisma eine möglichst große Flächenzahl angestrebt werden muß. Je größer die Flächenzahl am Polygonprisma ist, um so ruhiger ist der Bildstand, und es kann auf eine Abblendung beim Bildwechsel vollständig verzichtet werden, d.h. es findet beim Übergang von einem Bild zum nächsten eine Überblendung ohne Dunkelphase statt.

Mit der Anzahl der Flächen steigt aber auch der Durchmesser des Polygons, so daß die obengenannte große Eingangsschnittweite erforderlich ist. Je größer die Flächenzahl,
desto größer muß auch die Eingangsschnittweite sein.

Ferner ist dabei zu bedenken, daß die übertragbare
Apertur um so geringer ist, je größer die Flächenzahl
ist, was jedoch aus Gründen der Astigmatismus-Reduzierung
günstig ist. Allerdings muß durch entsprechende Beleuchtungsausbildung in bekannter Weise der Helligkeitsverlust wieder ausgeglichen werden.

Nun sind zwar bereits Laufbildprojektionsgeräte mit
optischem Ausgleich bekannt, bei denen das Objektiv die
erforderliche lange Eingangsschnittweite besitzt, aber
dabei handelt es sich um Objektive langer Brennweite,
die eingesetzt werden, um in einfachster Weise diese
lange Schnittweite zu erzielen. Dies erfordert aber eine
große Abbildungslänge, und man erhält trotzdem nur ein
kleines Bild. Das steht aber im Gegensatz zu der Forderung,
daß sowohl Filmbetrachter als auch Filmprojektoren mit
eingebautem großem Bildschirm möglichst kompakte Geräte
sein sollen.

Objektive kurzer Brennweite bei gleichzeitig langer
Schnittweite erfordern einen sehr hohen konstruktiven
Aufwand, vor allem, wenn für einen möglichst großen Bildschirm bei kurzer Gesamtabbildungslänge ein entsprechend großer Bildwinkel notwendig ist. Dabei sind zum Teil hohe Einzelbrechkräfte an den Linsenflächen, mit der Folge enger Toleranzen, unumgänglich.

Der Erfindung liegt daher die Aufgabe zugrunde, ein einfaches optisches System zu entwickeln, welches die für die Durchdringung eines Polygonprismas erforderliche lange Eingangsschnittweite bei kleinem objektseitigen Bildwinkel aufweist und gleichzeitig einen großen bildseitigen Abbildungswinkel zur Ausleuchtung eines großen Bildschirmes auf kurzer Distanz besitzt.

Gemäß der Erfindung ist diese Aufgabe durch ein optisches System gelöst, das die in den Ansprüchen angegebenen Merkmale aufweist.

Das erfundene optische System besteht aus zwei Linsengruppen, von denen die erste Linsengruppe mit einer geringen Vergroßerung ein Zwischenbild erzeugt, so daß eine lange Eingangsschnittweite und ein geringer objektseitiger Bildwinkel, welche beide zur Durchdringung eines vielflachigen Polygonprismas erforderlich sind, erreicht wird, und daß die zweite Linsengruppe mit einer starkeren Vergroßerung und mit einem großen bildseitigen Abbildungswinkel das Zwischenbild auf kurzem Abstand stark vergrößert.

Bei diesem erfindungsgemäßen optischen System erfüllt die erste Linsengruppe die Bedingungen

$$-\beta_1 < 4 \quad \text{und} \quad \omega_1 \leq 10^{\circ}$$

und die zweite Linsengruppe erfüllt die Bedingung

$$-\beta_2 > 4 \quad \text{und} \quad \omega_2 \geq 10^{\circ}$$

Des weiteren enthält das System in der Nähe der Zwischenbildes eine Feldlinse, die der Pupillenabbildung und der Lichtführung dient.

Der besondere Vorteil des erfundenen optischen Systems liegt darin, daß es die für die Durchdringung eines vielflachigen Polygonprismas erforderliche lange Eingangsschnittweite bei kleinem objektseitigen Bildwinkel aufweist und gleichzeitig einen großen bildseitigen Abbildungswinkel zur Ausleuchtung eines großen Bildschirmes auf kurzer Distanz hat.

Weiterhin ergibt sich ein geringes Öffnungsverhältnis für beide Linsengruppen und zusätzlich ein kleiner Bildwinkel für die erste Linsengruppe, mit dem weiteren Vorteil einer äußerst geringen Anspannung der einzelnen Linsenflächen und der sich daraus ergebenden großzügigen Toleranzen.

Dabei wird durch geeignete Ausbildung des Kondensors und der Feldlinse in bekannter Weise eine Lichtführung und Pupillenübertragung erzielt, die eine gute Lichtausnutzung trotz kleinem Öffnungsverhältnis beider Linsengruppen gewährleistet.

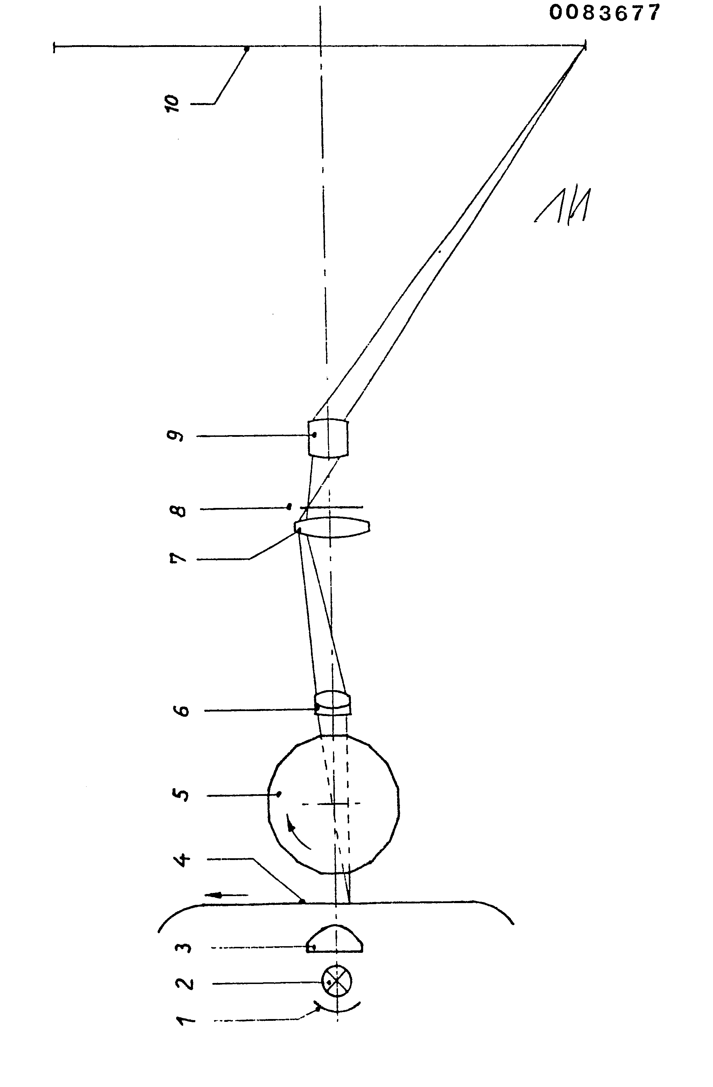

In der Zeichnung ist das erfundene optische System in einem Ausführungsbeispiel dargestellt. In der Figur ist mit 1 ein Hohlspiegel bezeichnet, der die Wendel einer Lampe 2 seitlich oder in der Höhe versetzt in die gleiche Ebene abbildet, während ein Kondensor 3 diese leuchtende Fläche von Wendel und Wendelbild durch den Film 4 und ein Polygonprisma 5 hindurch in die Eintrittspupille der ersten Linsengruppe 6 abbildet, die hier als einfaches achromatisches Kittglied dargestellt ist. Die Linsengruppe 6 bildet den Film 4 in die Zwischenbildebene 8 ab, mit vorzugsweise etwa 2-facher Vergrößerung. Gleichzeitig bildet die Linsengruppe 6 aber auch die Pupille des Kondensors 3 in die Feldlinse 7 ab. Die Feldlinse 7 bildet die Pupille der Linsengruppe 6, und damit die Lampenwendel, in die Eintrittspupille der zweiten Linsengruppe 9 ab. Diese wiederum bildet das gleichmäßig ausgeleuchtete Zwischenbild 8 unter großem Winkel und mit stärkerer Vergrößerung auf den Bildschirm 10 ab.

Die Figur zeigt neben den optischen Bauteilen den prinzipiellen Strahlenverlauf des abbilden Strahlenganges im Meridionalschnitt. Auf eine gleichzeitige Darstellung des Beleuchtungsstrahlenganges wurde aus Gründen der Übersichtlichkeit verzichtet.

Die Darstellung ist jedoch nicht streng maßstäblich, da insbesondere der Abstand zwischen der Linsengruppe 9 und dem Bildschirm 10 zur Erzielung eines noch größeren Bildes erheblich größer sein kann als dargestellt.

A n s p r ü c h e

1.) Optisches System für die Laufbildprojektion mit optischem Ausgleich der Bildwanderung durch ein Polygonprisma, bestehend aus zwei Linsengruppen, von denen die erste Gruppe ein Zwischenbild erzeugt und die zweite Gruppe dieses Zwischenbild auf einen Projektionsschirm abbildet, dadurch gekennzeichnet, daß die erste Linsengruppe (6) das Zwischenbild mit einer geringen Vergrößerung, die kleiner ist als 4-fach, erzeugt, so daß eine lange Eingangsschnittweite zur Durchdringung des Polygonprismas (5) erreicht wird, und daß die zweite Linsengruppe (9) das Zwischenbild mit einer stärkeren Vergrößerung, die größer ist als 4-fach, weiter abbildet.

2.) Optisches System nach Anspruch 1, dadurch gekennzeichnet, daß die erste Linsengruppe (6) einen Abbildungswinkel gleich oder kleiner als $2 \times 10^{o}$ hat.

3.) Optisches System nach den Ansprüchen 1 und 2, dadurch gekennzeichnet, daß die zweite Linsengruppe (9) einen Abbildungswinkel gleich oder größer als $2 \times 10^{o}$ hat.

4.) Optisches System nach den Ansprüchen 1 bis 3,

<u>dadurch gekennzeichnet</u>, daß zwischen der ersten Linsengruppe (6) und der zweiten Linsengruppe (9) in der Nähe des Zwischenbildes (8) eine Feldlinse (7) zur Pupillenabbildung und Lichtführung angeordnet ist.

0083677

10

9

8

7

6

5

4

3

2

1

### Europäisches Patentamt

## EUROPÄISCHER RECHERCHENBERICHT

EP  82 10 0186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| X | US-A-3 259 450  (E.C.BAROCELA) *Spalte 5, Zeilen 33-42; Spalte 8, Zeilen 1-10; Figur 13* | 1 | G 03 B  41/08 G 02 B  27/00 |
| | --- | | |
| Y | FR-A-2 356 176  (R.A.OLODORT) *Seite 11, Zeile 37 - Seite 12, Zeile 29; Figur 1* | 1 | |
| | --- | | |
| A | DE-A-2 739 119  (ELEKTRO-OPTIK GmbH) *Seite 3, Zeile 1 - Seite 4, Zeile 20* | | |
| | ----- | | |

| RECHERCHIERTE SACHGEBIETE (Int Cl ³) |
|---|
| G 02 B  11/00 G 02 B  13/00 G 02 B  27/00 G 03 B   1/00 G 03 B  21/00 G 03 B  41/00 |

Der vorliegende Recherchenbericht wurde für alle Patentansprüche erstellt

| Recherchenort DEN HAAG | Abschlußdatum der Recherche 08-09-1982 | Prüfer PRATSCH H.R. |
|---|---|---|